Europäisches Patentamt

European Patent Office

Office européen des brevets

(11) Publication number: 0 414 970 A1

# EUROPEAN PATENT APPLICATION

(21) Application number: 89308839.3

(22) Date of filing: 31.08.89

(51) Int. Cl.⁵: **F16H 53/04, G05G 21/00**

The title of the invention has been amended (Guidelines for Examination in the EPO, A-III, 7.3).

(43) Date of publication of application:
**06.03.91 Bulletin 91/10**

(84) Designated Contracting States:
**DE FR IT NL**

(71) Applicant: **KEYSTONE INTERNATIONAL HOLDINGS CORP.**

9600 West Gulf Bank Drive
Houston Texas 77040(US)

(72) Inventor: **Gibbs, Stephen**
**Stonefield Cottage Kirkton Road**
**Neilston Glasgow G71 3HN Scotland(GB)**

(74) Representative: **Jones, Andrée Zena et al**
**CRUIKSHANK & FAIRWEATHER 19 Royal**
**Exchange Square**
**Glasgow, G1 3AE Scotland(GB)**

(54) Position sensor with angularly adjustable cams.

(57) The invention relates to a device for sensing the position of a component, for example a shaft, in relation to other components in, say, a shaft assembly. The device which is to be fixed to the component to move with it comprises a body portion (2) and an end plate (18) which is clamped to the body portion to form a column or stack with a number of cam members (8,10). Each cam member comprises an exterior cam surface (12) and an interior toothed or splined surface (14), there being further provided for the or each cam member, a cog member (32,34) adapted to engage said interior surface, said cog member being mounted upon a spindle (30) passing through a bore passing through said body member in a direction heightwise with respect to said column or stack, means being provided upon a free end of said spindle (30) to facilitate rotation of the cog member (32,34) to move the cam member (8,10) with respect to the body member (2).

FIG.2

## POSITION SENSING DEVICE

The invention is concerned with improvements in or relating to devices for sensing the position of a component capable of movement relative to other components in an assembly.

It is frequently necessary to monitor the angular position of a component for example a shaft in relation to other components. A typical situation is one in which a shaft is movable in the operation of a switching device between end positions either through a series of intermediate positions or in a continuously variable manner between the end positions, for example "on" and "off" positions. Such switching devices may be used for example with valves controlling a fluid flow or in any convenient manner.

A conventional position sensing device may comprise at least one cam surface projecting from a sensor body, the position of the surface(s) being adjustable according to the monitoring requirements relating to the movable component. While it is a relatively simple matter to adjust the position of the cam surface before incorporation of the sensing device into its operating situation it is frequently extremely difficult to adjust the cam surface once the sensing device is in position within a control box or the like.

It is an object of the invention therefore to facilitate the adjustment of cam surfaces of the above mentioned type of sensing device while in an operating situation.

The invention therefore provides a device for use in sensing the position of a first component in an assembly of components relative to other components thereof, said device comprising a body portion adapted in use to engage said first component so as to move therewith, an end plate adapted to be clamped with respect to the body portion and at least one cam member forming a stack or column with said end plate and adapted to be clamped by the end plate in a desired position with respect to the body portion, the or each cam member comprising an exterior cam surface and an interior toothed or splined surface, there being further provided for the or each cam member, a cog member adapted to engage said interior surface, said cog member being mounted upon a spindle passing through a bore passing through said body member in a direction heightwise with respect to said column or stack, means being provided upon a free end of said spindle to facilitate rotation of the cog member to move the cam member with respect to the body member.

Conveniently the first component is a shaft partaking of rotary movement. In an example of the invention, the body member is annular, encircling the shaft, there being two or more cam members settable to positions corresponding to end positions of the rotary movement of the shaft and, optionally, intervening positions, said cam members also being annular. In this construction the toothed interior surface is continuous.

There will now be described examples of a devices according to the invention. It will be understood that the description, which is to be read with reference to the drawings, is given by way of example only and not by way of limitation.

In the drawings:-

Figure 1 is a plan view of a device including two cam members;

Figure 2 is an exploded view of the device of Figure 1 showing the parts thereof;

Figure 3 is a bottom plan view of the device of Figures 1 and 2 with the end plate removed;

Figure 4 is a sectional view on line IV-IV of Figure 1;

Figure 5 is a sectional view on line V-V of Figure 1;

Figures 6 and 7 show the device of Figures 1-5 incorporated in a pneumatic position controlling means being top plan and side view respectively;

Figures 8 and 9 are sectional views of a device having four cam members; and

Figure 10 is a similar view to Figure 9 of an arrangement providing a device having eight cam members.

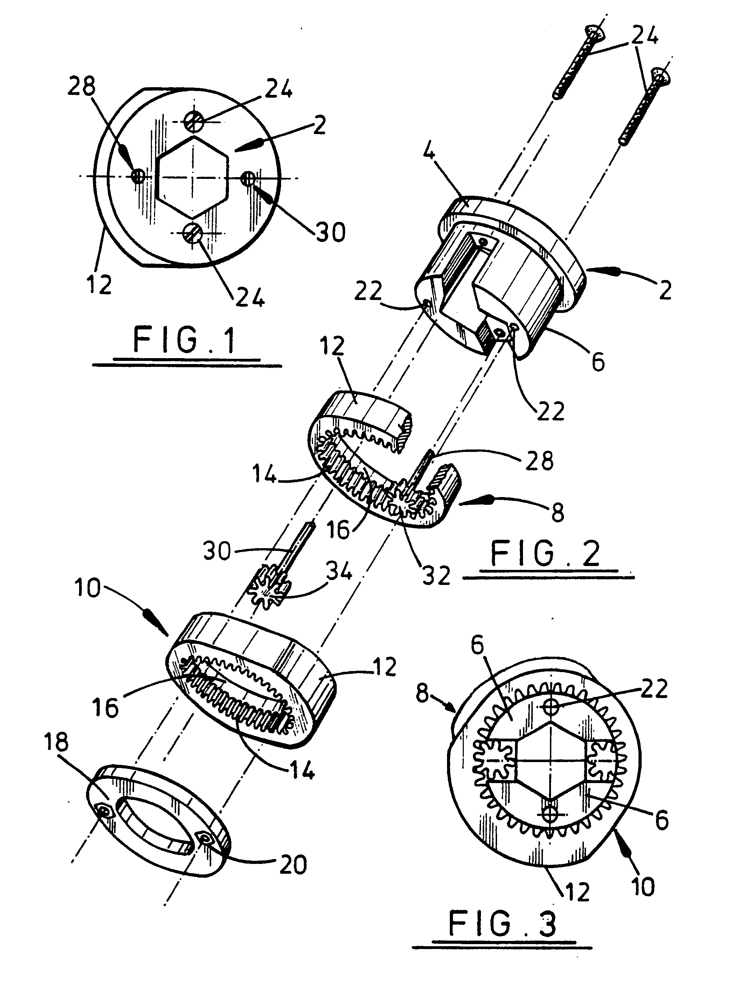

The device described in Figures 1 - 7 comprises a body portion 2, comprising a flange 4 and a part-cylindrical core 6. Two cam members 8,10 are provided each being substantially annular in plan and provided with an exterior projecting cam surface at 12 and an interior surface provided with splines 14 extending over a large proportion of the depth thereof except for a rim portion 16. An annular end plate 18 is provided with two internally threaded bores 20 which may be aligned with lengthwise bores 22 provided in the core 6 of the body portion 2 and through which pass clamping screws 24.

Further bores 26 formed in the body portion 2 each receive one of two spindles 28, 30 of cog members 32,34. The spindle 28 is shorter than the spindle 30 since the associated cog member 32 engages with the splines 14 of the uppermost cam member 8 as viewed in the Figures. Cog member 32 engages in the splines of the cam member 10.

Each spindle 28,30 is provided at its free end with a cross-slot 36 which enables the spindle to be rotated by a tool so as to rotate the respective cog members 32,34 when the clamping screws 24 are loosened. Rotation of the cog member 32 causes the cam member 8 to rotate until the surface 12 is in the desired position. Similarly the cog member 34 causes the cam member 10 to rotate until its surface 12 is also in a desired position. The screws 24 are then tightened to maintain the desired positions.

It will be understood that the number of cam members may be selected to suit operating requirements, for example, to detect "on" and "off" positions of the movable component. However, where the device cannot readily be pre-set or where the setting of the cam members needs to be adjusted during use, the use of a device according to the present invention permits access to the adjusting spindle from an axial direction rather than the usually less accessible lateral direction. Thus in a situation where the device is used in a control box, access for adjustment is simply obtained by removal of the top plate or lid.

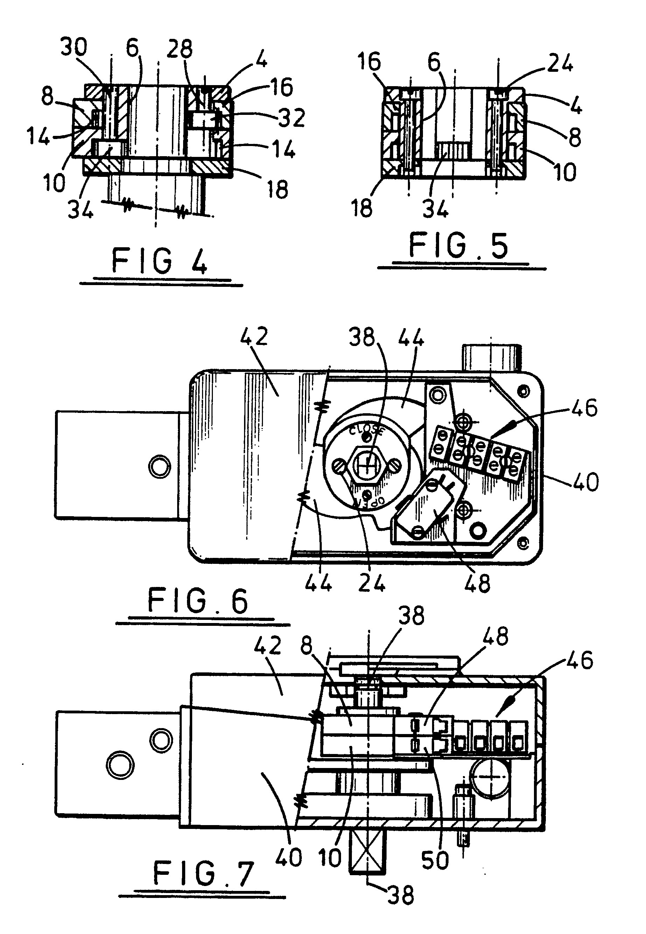

Such an arrangement is illustrated in Figures 6 and 7, in which the rotational movement of a shaft is to be monitored and an indication given as to its position with respect to end positions of its angular rotation corresponding to "on" and "off" conditions of related machinery.

A shaft 38 therefore passes through a control box 40 having a top plate 42. A number of cams 44 projecting from the shaft operate switching mechanism indicated at 46.

Arranged at levels in the box 40 corresponding to the cam members 8 and 10 are two microswitches 48,50, operated respectively when the angular position of the shaft corresponds to "on" and "off". Thus the microswitches activate indicator means which give a visual read-out (not shown) of the state of the switching mechanism 46.

The facility to adjust the operation of the microswitches is available simply by removal of the top plate 42 and inserting a small screwdriver in a direction parallel to the shaft axis 38.

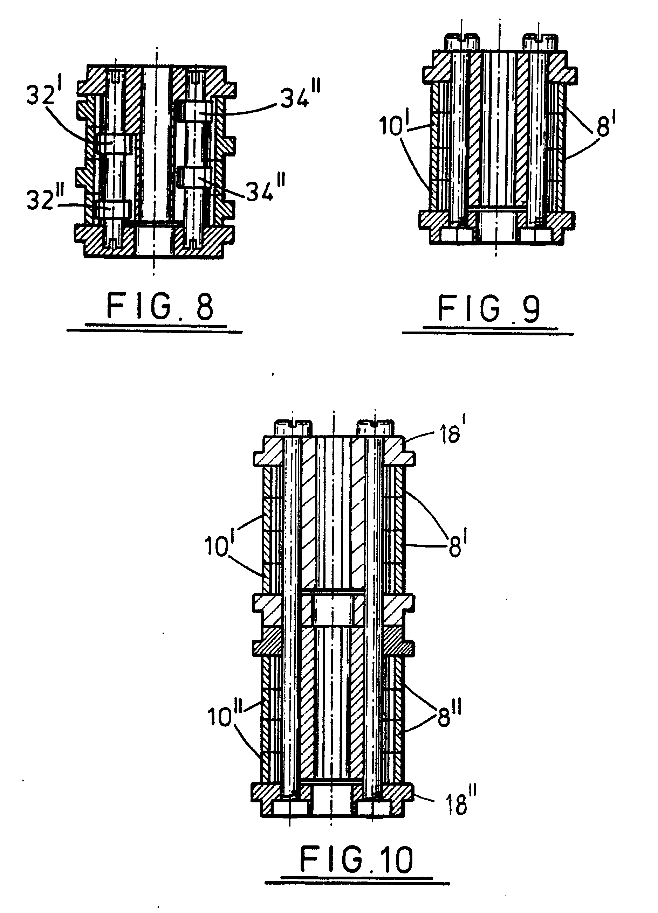

Figure 8 illustrates a modified device in which the arrangement of four cam members 8′ having four cog members 32′, 32″, 34′, 34″, provides a column or stack of four adjustment means permitting, for example, control of a 'start' position, a 'stop' and two intermediate positions of a component. If more control positions are required, an arrangement such as is shown in Figure 10 may be employed, in which two columns or stacks as in Figures 8 and 9 are provided including four cam members 8′, 8″, 10′, 10″, arranged in tandem or back-to-back configuration so as to give eight control positions.

Various modifications may be made within the scope of the invention as defined by the following claims.

## Claims

1. A device for use in sensing the position of a first component in an assembly of components relative to other components thereof, said device comprising a body portion (2) adapted in use to engage said first component so as to move therewith, an end plate (18) adapted to be clamped with respect to the body portion and at least one cam member (8, 10) forming a stack or column with said end plate (18) and adapted to be clamped by the end plate (18) in a desired position with respect to the body portion (2), the or each cam member (8, 10) comprising an exterior cam surface (12) and an interior toothed or splined (14) surface, there being further provided for the or each cam member a cog member (32, 34) adapted to engage said interior surface, said cog member (32, 34) being mounted upon a spindle (28, 30) passing through a bore passing through said body member (2) in a direction heightwise with respect to said column or stack, means (36) being provided upon a free end of said spindle to facilitate rotation of the cog member to move the cam member with respect to the body member.

2. A device as claimed in claim 1, adapted to sense the position of a first component in the form of a shaft (38), the body member (2) of the device being annular.

3. A device as claimed in either one of claims 1 and 2, wherein there are two or more cam members (8, 10) in said stack or column.

4. A device as claimed in claim 2, wherein there are two cam members settable to positions corresponding to end positions of rotary movement of the shaft (38).

5. A device as claimed in claim 4, wherein there are further cam members which are settable to positions corresponding to intervening positions.

6. A device as claimed in either one of claims 4 and 5, wherein the toothed or splined (14) interior surface of the cam member is continuous around the annular cam member.

7. A device as claimed in any one of claims 2 to 6, wherein the body member (2) comprises a part-cylindrical core around which are received the annular cam members, each said cog members (32, 34) associated with one of the cam members being received substantially within the part-cylindrical core but having a selected number of teeth thereof projecting so as to engage said interior surface of the associated cam member.

8. A device as claimed in claim 7, wherein said cog members (32, 34) are mounted on spindles (28, 30) and are individually and selectively rotatable by means of said spindles, free end portions of which are tool accessible through said end plate (18).

9. A device as claimed in any one of claims 1 to 8, wherein there is provided a first column or stack of cam members (8′,10′) with a first end plate (18′) and a second column or stack of cam members (8″,10″) with a second end plate (18″), the construction and arrangement being such that the two columns or stacks are arranged in tandem with the end plates (18′, 18″) being outwardly arranged so that end portions of the spindles of cog members of one column or stack are tool accessible from a first direction and end portions of the spindle of cog members of the other column are accessible from a second, opposed, direction.

FIG.1

FIG.2

FIG.3

FIG 4

FIG. 5

FIG. 6

FIG. 7

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | FR-A-2 592 452  (BERNARD)<br>* Page 4, line 12 - page 6, line 22; figures * | 1-8 | F 16 H   53/04<br>G 05 G   21/00 |
| X | FR-A-2 613 805  (BERNARD)<br>* Page 8, claim 1; figures * | 1-8 | |
| A | DE-A-2 506 879  (DENZER)<br>* Page 5, last paragraph - page 6, paragraph 2; figures * | 1-7 | |
| E | GB-A-2 217 422  (KEYSTONE)<br>* Whole document * | 1-9 | |

TECHNICAL FIELDS
SEARCHED (Int. Cl.5)

F 16 H
G 05 G
H 01 H

The present search report has been drawn up for all claims

| Place of search | Date of completion of the search | Examiner |
|---|---|---|
| THE HAGUE | 24-04-1990 | MENDE H. |